# EUROPEAN PATENT APPLICATION

(11) **EP 4 800 549 A1**
(43) Date of publication of application: **02.09.2026**
(21) Application number: 26160433.4
(22) Date of filing: 24.02.2026
(51) Int. Cl.: G06F 9/451

(54) **WEB APPLICATION BASED SCREEN SHARE ANNOTATIONS**

(30) Priority: 28.02.2025 US 202519067746
(71) Applicant: Intuit Inc., Mountain View, CA 94043 (US)
(72) Inventor: SINGH, Avinash, Mountain View, 94043 (US); PRASAD, Vivek, Mountain View, 94043 (US); GUPTA, Bhaskar, Mountain View, 94043 (US); SAAGI, Harsha, Mountain View, 94043 (US)
(74) Representative: D Young & Co LLP

(57) **Abstract**

Performing web application based screen share annotations includes obtaining, from a source browser executing a web application performing a screen sharing, a location point of the source browser with respect to a shared source screen being shared. Performing web application based screen share annotations further includes calculating, from the location point, a source portion of the shared source screen that shows the web application, translating the source portion to a target portion within a target web browser executing on a target device. Performing web application based screen share annotations further includes demarcating, on the target display, the target portion within the target browser.

## Description

### BACKGROUND

Conferencing programs enable communications between users that are using computers remote from each other. In some cases, enabling screen sharing assists in the remote communication. Different types of screen sharing may be used. For example, screen sharing may be with the entire screen or only an application window without the remainder of the screen.

Another aspect of conferencing programs is the ability of the remote user to provide annotations which are rendered on the screen of the sharing user. Namely, the sharing user shares the shared screen and the remote user, when viewing the shared screen, annotates the shared screen. The annotations are then displayed on the sharing user's screen. For locally executing conferencing programs, the annotations may appear on any portion of the sharing user's screen.

A problem exists in conferencing functionality when the conferencing functionality is part of a web application rather than a local program executing on a user's computing system. A web application is served from a server to a user's computing system and executes within a local browser of a user's computing system. For web applications providing the conferencing, the web application can only display annotations within the confines of the web application in the browser. This causes a user interface problem whereby the remote user can see a sharing user's entire screen, and may mark on the entire screen, but cannot see the confines of the region for annotations.

### SUMMARY

Particular aspects are set out in the appended independent claims. Various optional embodiments are set out in the dependent claims.

In general, in one aspect, one or more embodiments relate to a method that includes obtaining, from a source browser executing a web application performing a screen sharing, a location point of the source browser with respect to a shared source screen being shared. The method further includes calculating, from the location point, a source portion of the shared source screen that shows the web application, translating the source portion to a target portion within a target web browser executing on a target device. The method further includes demarcating, on the target display, the target portion within the target browser.

In general, in one aspect, one or more embodiments relate to a system that includes a source instance of a web application executing in a source browser configured to perform first operations and a target instance of the web application executing in a target browser configured to perform second operations. The first operations include executing a screen sharing of a shared source screen and obtaining a location point of the source browser with respect to the shared source screen being shared. From the location point, a source portion of the shared source screen that shows the web application is calculated. The second operations include translating the source portion to a target portion within a target web browser executing on a target device and demarcating, on the target display, the target portion within the target browser.

In general, in one aspect, one or more embodiments relate to a computer readable medium comprising computer readable program code for causing one or more computing systems to perform operations. The operations include obtaining, from a source browser executing a web application performing a screen sharing, a location point of the source browser with respect to a shared source screen being shared. The operations further include calculating, from the location point, a source portion of the shared source screen that shows the web application, translating the source portion to a target portion within a target web browser executing on a target device, and demarcating, on the target display, the target portion within the target browser.

Other aspects of one or more embodiments will be apparent from the following description and the appended claims.

### BRIEF DESCRIPTION OF DRAWINGS

FIG. 1 shows an example interface on the target computing device in accordance with one or more embodiments.
FIG. 2 shows a computing system in accordance with one or more embodiments.
FIG. 3 shows a diagram of a screen share in accordance with one or more embodiments.
FIG. 4 shows a flowchart in accordance with one or more embodiments.
FIG. 5A and FIG. 5B show an example on the target computing device and the source computing device in accordance with one or more embodiments.
FIG. 6 shows an example of a multiple screen device in one or more embodiments.
FIG. 7A and FIG. 7B shows a computing system in accordance with one or more embodiments.

Like elements in the various figures are denoted by like reference numerals for consistency.

### DETAILED DESCRIPTION

One or more embodiments are directed to addressing a user interface problem when conferencing functionality is provided by a web application. A web application manages the conferencing between a source computing system and a target computing system. The source computing system is the source of the screen share. The target computing system displays the screen share on the source computing system. Because the web application is providing the conferencing functionality, annotations provided by the target computing system may only be shown within the confines of the source browser on the source computing system. Thus, in the case of a full screen share, even though the full screen is displayed to the target user, only a portion of the screen is available for annotations.

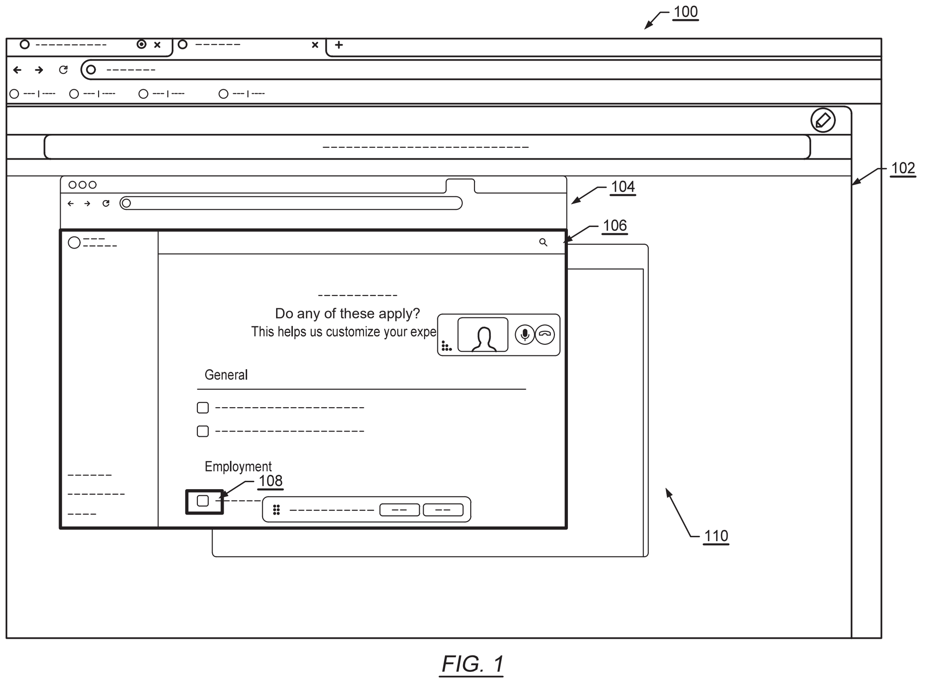

By way of an example, consider the example interface shown in FIG. 1. The particular contents of the interface are for example purposes only and not intended to limit the scope, which is set out in the appended claims. FIG. 1 shows a graphical user interface of a target browser (100) executing on a target computing system in one or more embodiments. Within the target browser (100) is a full screen share (202) showing the sharing users' desktop. On the full screen share (202), the interface of the source browser (104) is displayed. The web application portion (106) of the source browser corresponding to the web application is demarcated with a box. The web application portion (106) is the source portion when on the source display and the target portion on the target display. Areas within the web application portion (106) can be annotated by a target user. Areas outside of the web application portion (110) cannot be annotated because such annotation would not appear on the source user's screen. Namely, only the web browser that is performing the conferencing functionality would be able to display the annotation. To address this user interface challenge, one or more embodiments demarcate the area (106) in which the annotation is allowed. By performing a demarcation, the target user can identify the constraints for the annotation and may add annotation (108) to the web application portion (106). The annotation is then shown on the source display device in the source browser.

To address this user interface problem, one or more embodiments determine where the browser is located on the source screen. Based on the location of the browser, the source portion of the source screen where annotations may be displayed is calculated. The source portion is translated to be a target portion within the web application on the target device. Namely, the target portion is the portion displayed in the web application that matches the source portion. The target portion is then demarcated in the display for the target user. By demarcating the target portion, the target user can identify and limit annotations to only be in portions of the source screen that will be able to display the annotations.

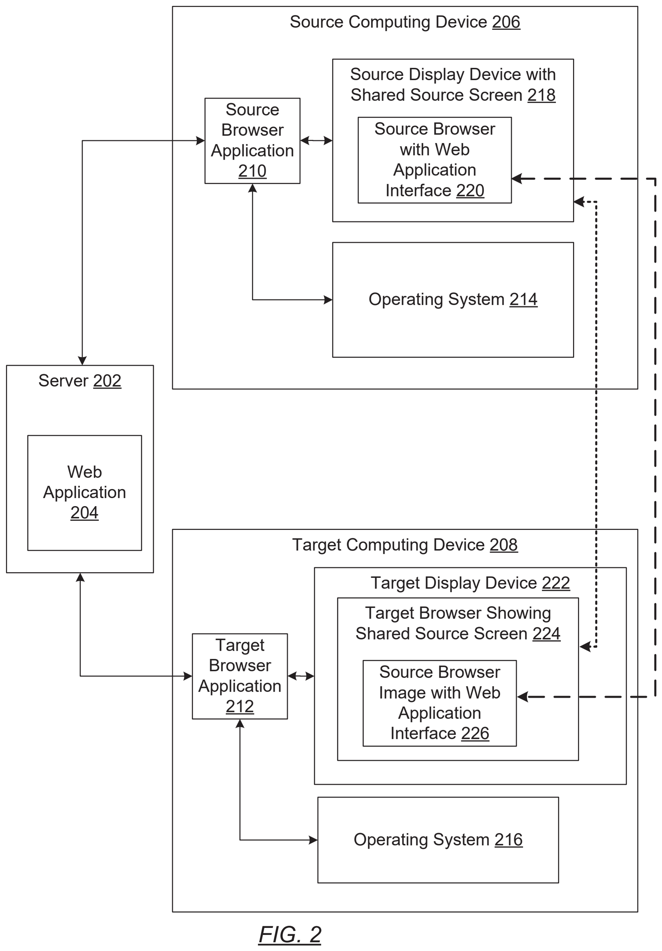

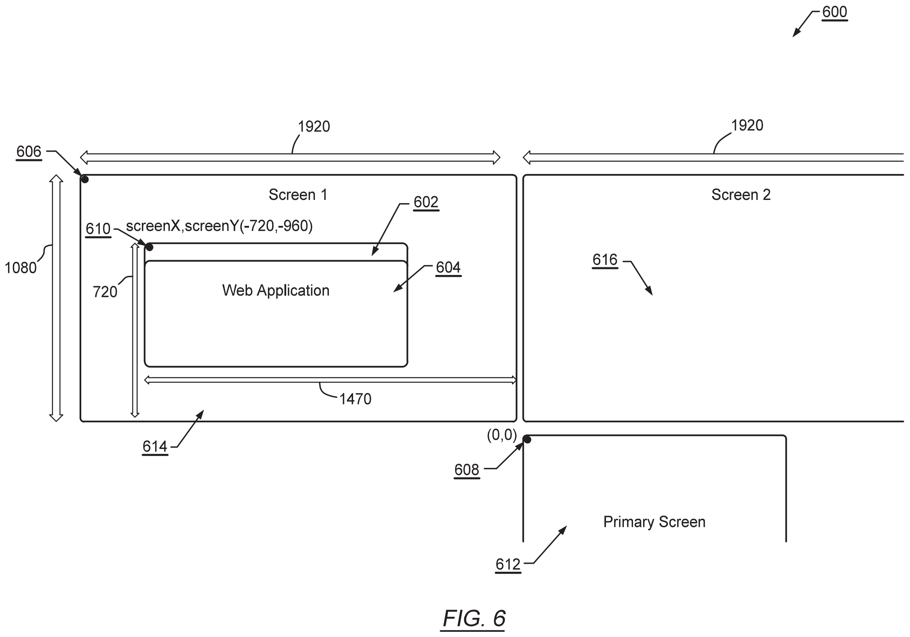

Attention is now turned to the figures. FIG. 2 shows a system in accordance with one or more embodiments. As shown in FIG. 2, the system includes a server (202) having a web application (204), a source computing device (206), and a target computing device (208). The server is a computing device, such as described in FIG. 6A and FIG. 6B, that includes functionality to serve a web application (204) to various computing devices. The term, web application, corresponds to the standard definition used in the art. A web application is software that is transient in that the instructions of the web application execute within a web browser. In addition to a primary functionality of the web application (204), the web application (204) may also include a conferencing functionality.

The server (202) may be interposed between two or more user computing devices (*e.g.,* a source computing device (206), the target computing device (208)). Generally, a user computing device is a computing device, such as described below in FIG. 6A and FIG. 6B, that is used by a user. For example, a user computing device may be a laptop, desktop, tablet, phone, or other computing device. At least one of the user computing devices is a source computing device (206) and at least one of the user computing devices is a target computing device (208). A source computing device (206) is the source of a screen share. A target computing device (208) is a target that views the screen share and may provide annotations.

The source computing device (206) and target computing device (208) may include functionality to execute a browser application (*e.g*., source browser application (210), target browser application (212)). A browser application is the software of a browser. The terms, browser and browser application, corresponds to a standard definition used in the art. Specifically, a browser application is a computer program with a graphical user interface for displaying and navigating between webpages. The layout and interface elements displayed within a window of the browser are not locally defined. Specifically, the functionality provided by the browser is to access functionality of other applications and servers. The source browser application (210) has the instructions for the source browser on the source computing device (206). The target browser application (212) has the instructions for the target browser on the target computing device (208).

The source computing device (206) and target computing device (208) may include functionality to execute an operating system (*e.g*., operating system (214), operating system (216)). The operating system (*e.g.,* operating system (214), operating system (216)) is system software that manages hardware (*e.g*., physical or virtual) and software resources of the computing system. One functionality of the operating system is to manage the display of windows within the screen, including number, size, and shape. The operating system is configured to respond to system calls requesting information about the windows in the display.

Continuing with FIG. 2, the source computing system (206) includes a source display device with a shared source screen (218). The display device is the physical device that displays a screen. The screen is a series of images on the display. The shared source screen (218) is the screen that is shared in a conferencing system. The shared source screen (218) is all or a portion of the image on a display device. The shared source screen (218) is configured to display the source browser generated by source browser application (210). The source browser shows the web application interface (220). The web application interface (220) is the interface of the web application (204) as rendered by the source browser application (210).

Similarly to the source computing device (206), the target computing device (208) includes a display device (*i.e.,* the target display device (222)). The screen displayed in the target display device (222) includes a target browser showing a shared source screen. The target browser is the interface rendered by the target browser application (212). The target browser shows the web application (204). Within the web application rendered by the target browser is the shared source screen (218) that is shared by the source computing device (206). Because the target browser shows the shared source screen (224), the target browser shows the source browser with the web application interface (226). Namely, the source browser with the web application interface (226) is the series of images from the source display.

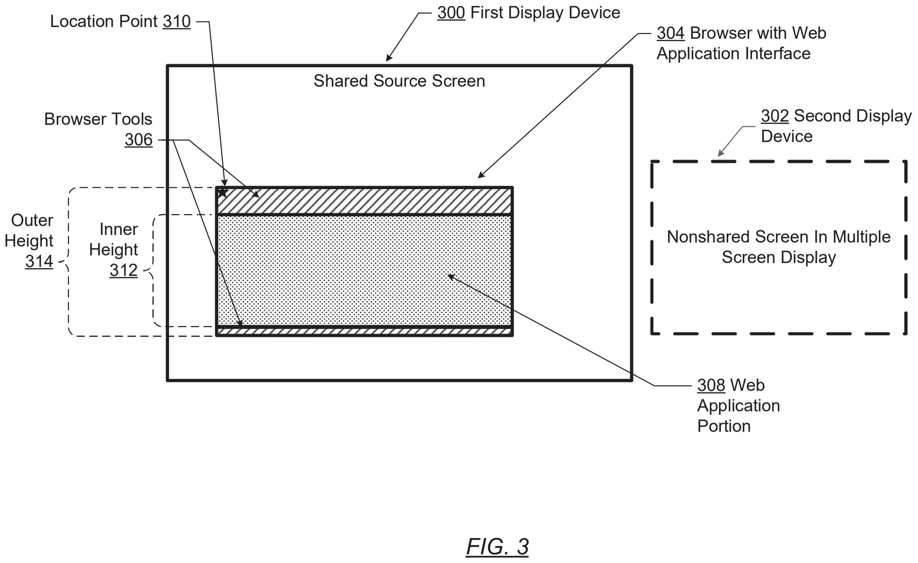

FIG. 3 is a diagram of screen sharing on the source screen in one or more embodiments. The source computing device includes a first display device (300) and, optionally, one or more additional display devices (*e.g*., second display device (302). If multiple display devices exist, one of the display devices (*e.g.,* first display device (300), second display device (302)) is the primary display device. The primary display device defines the origin point. The origin point is a location by which other locations are defined. Namely, location points specified by the operating system are defined with respect to origin point. Further, the remaining screens have locations defined with respect to the primary display device.

In FIG. 3, the first display device (300) has the shared source screen, the second display device (302) has the non shared screen in multiple screen display. The shared source screen shows a browser (*i.e.,* source browser) with a web application interface (304). The browser with the web application interface (304) may include browser tools (304) and a web application portal (308). The browser tools (306) are the portion of the browser that is generated by the instructions in the browser application. For example, the browser tools (306) may have the instructions for selecting an address of the web application, changing the scaling of the view, adjusting the settings of the browser, or other portions that are defined by the browser. The browser also shows the web application portion (308). The web application portion (308) is the portion of the browser that is defined by the web application instructions. Namely, the web application instructions are interpreted by the browser application and defined by the web application.

The web application portion (308) is a portion of the shared source screen within which annotations may be displayed. Specifically, because the web application portion (308) is defined by the instructions of the web application, and because the web application has the conferencing functionality that controls the annotations, the annotations from a target computing device are limited to the web application portion. Thus, it may be appropriate to demarcate the web application portion.

Demarcating the web application portion (308) includes identifying a location of the browser. The location of the browser may be defined by the location point (310). Specifically, the location point (310) is a point that specifies a location of the browser with respect to the shared screen. Although FIG. 3 shows the location point as being in the top left corner of the browser, the location point may be any location that defines the location of the browser and is defined with respect to the browser.

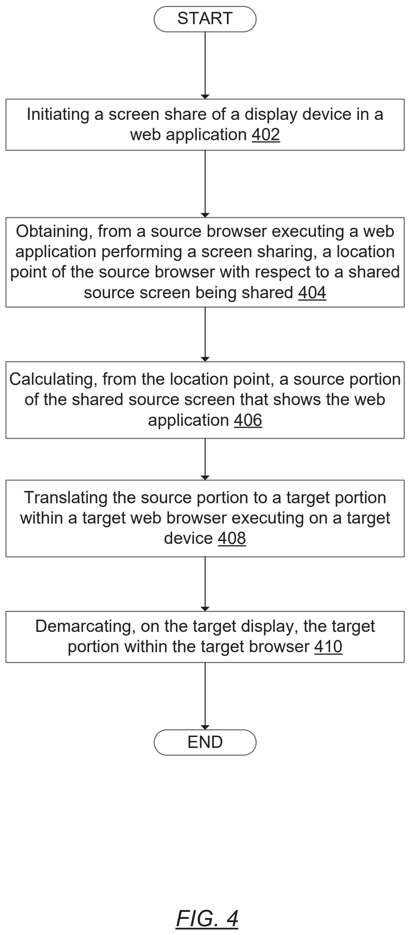

In addition to the location point, an outer height (314) and an inner height (312) may be defined. The outer height (314) is the height of the overall browser (304) and the inner height (312) is the height of the web application portion (308) within the overall browser. Similarly, an outer width is the width of the browser overall, and the inner width is the width of just the web application portion within the browser. One or more embodiments are directed to demarcating the web application portion (308). Performing the demarcation is described in FIG. 4.

While FIG. 2 and FIG. 3 shows a configuration of components, other configurations may be used without departing from the scope of one or more embodiments. For example, various components may be combined to create a single component. As another example, the functionality performed by a single component may be performed by two or more components.

FIG. 4 shows a flowchart in accordance with one or more embodiments. The method of FIG. 3 may be implemented using the system of FIG. 2 and FIG. 3 and one or more of the steps may be performed on or received at one or more computer processors. While the various steps in this flowchart are presented and described sequentially, at least some of the steps may be executed in different orders, may be combined or omitted, and at least some of the steps may be executed in parallel. Furthermore, the steps may be performed actively or passively.

Turning to FIG. 4, Block 402 includes initiating a screen share of a display device in a web application. The instance of the web application executing in the source browser starts a screen share. For example, the screen share may be initiated in the conferencing functionality of the instance. In addition, the instance of the web application may also include additional functionality of the web application. For example, while using the web application, a user may initiate conferencing with help desk personnel via the web application to obtain help with the web application. In the conference, the user may screen share. The screen share may be a full screen share or only a screen share of the browser.

Block 404 includes obtaining a location point of the source browser with respect to a shared source screen being shared from a source browser executing a web application performing a screen sharing. Block 404 may be performed responsive to the screen share or responsive to the initiating of the annotations. The source browser executes instructions defined by the web application. At least one of the instructions being executed is an instruction of the web application that initiates a system call to the operating system on the source computing device. The system call requests the location point of the source browser from the operating system. Responsive, the operating system returns with the location point. One or more of the instructions cause the browser to identify an outer height value defining an outer height and an inner height value defining an inner height of the browser.

To handle multiple screens, the source browser detects through a system call with the operating system that multiple display devices exist and the information about the multiple screens. The position of the shared source screen with respect to the multiple screen displayed is determined through the information. The location point returned by the operating system is then defined with respect to the origin point. Direction may be through the positive and negative values along the horizontal and vertical axis with respect to the origin. By combining the position of the source screen with the location point with respect to the multiple screens, the location point is translated to be a location point with respect to the shared source screen.

Block 406 includes calculating, from the location point, a source portion of the shared source screen that shows the web application. The result of the system call(s) is a set of one or more values that may be used to define the source portion of the screen share in which annotations may be displayed. For example, to exclude the browser tools, the inner height value and an outer height value of the source browser within the source screen may be obtained. The difference between the inner height value and the outer height value may be calculated. The difference is subtracted from the top portion of the location point to identify the top of the web application portion (*i.e.,* source portion) that excludes the browser tool portion of the browser. A similar method may be used with the outer width and the inner width.

Notably, the source browser may have magnification on the web application portion (*e.g*., zoomed in or zoomed out). If magnification is performed, then the difference between the inner height and outer height may be inaccurate without scaling. Because the browser tools generally do not exist on the sides, the inner width and the outer width may be indicative of the amount of scaling. Thus, to determine the scaling amount, the ratio of an inner width value and an outer width value of the source browser is determined. The zoom level is set based on the ratio. Then, the inner height value is scaled based on the zoom level to obtain a scaled inner height value. The scaled inner height value is used for the inner height value to calculate the difference and determine the source portion.

Block 408 includes translating the source portion to a target portion within a target web browser executing on a target device. Notably, the source display device may have a different scale, different resolution, and different measurement units than the target computing device. Thus, translating the source portion may be performed by obtaining a first pixel resolution of the shared source screen, obtaining a second pixel resolution of a target screen being displayed in on the target display. The percentage change between the first pixel resolution and the second pixel resolution is determined. The source portion may then be scaled using the percentage change to identify the target portion. Additional translations may be performed to determine the target portion of the shared screen that matches the source portion. Matches mean that the target portion has the same boundaries as the source portion.

The various translations account for the different display properties of the target display device as compared to the source display device. By using the source portion in performing the calculation, direct calculation of the web application portion in the shared screen is determined. Thus, the processing resource usage is reduced as compared to using inference.

Block 410 includes demarcating, on the target display, the target portion within the target browser. The demarcation may be visual indicators on the target display that shows the boundaries of a target portion. For example, the demarcation may be a box around the web application portion in the shared screen. Based on the demarcation, a target user may annotate within the target portion in the target browser. The annotation may be one or more markings in the graphical user interface that include lines, boxes around objects or other visual notations. The target browser obtains the annotations within the target portion. Through the conferencing functionality, the annotation is transmitted to the source browser via the web application. Namely, the source browser executing the instructions of the web application displays the annotations. Because the annotations are limited to the confines of the web application portion (*i.e.,* source portion), the web application is able to cause the rendering of the annotation.

In one or more embodiments, the source browser may move within the shared screen. To handle moves, the source browser executing the web application may periodically poll an operating system to identify an updated location point of the source browser with respect to the shared source screen. If the location point changes, then the operations of FIG. 4 starting at Block 404 may be performed to determine a new source portion and target portion for demarcating the annotations. Thus, based on an updated location potion, the demarcation on the target display is updated.

In one or more embodiments, the source browser may be resized resulting in a need to update a display. Resizing events may be detected using an event listener. For example, the event listener may detect a browser resizing event that is processed by the source browser executing the web application instructions. Responsive to the browser resizing event, the demarcation on the target display may be updated. Specifically, the processing of FIG. 4 starting with Block 404 may be performed to update the demarcation based on the browser resizing event.

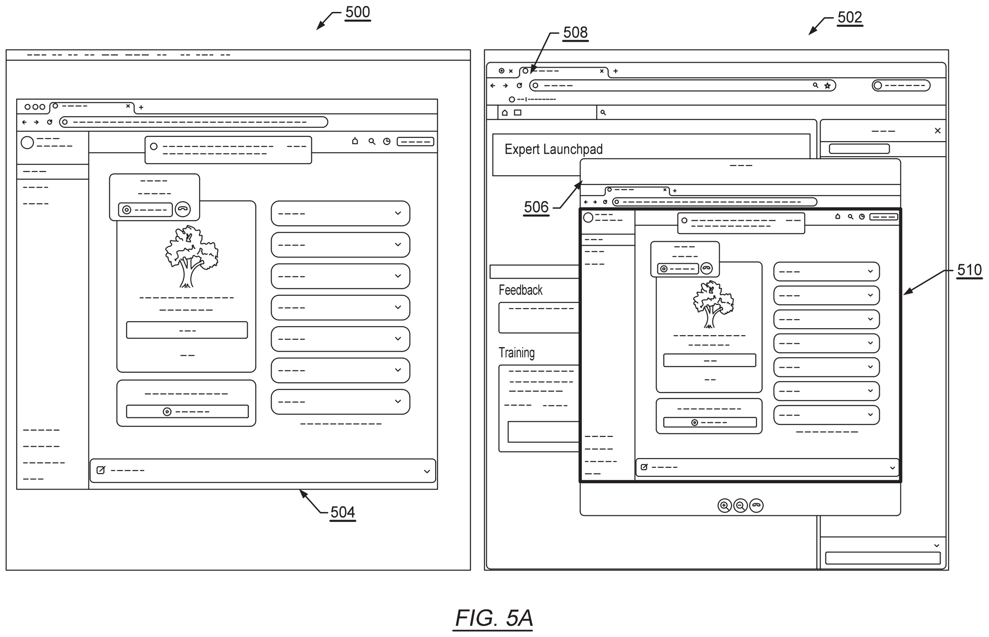

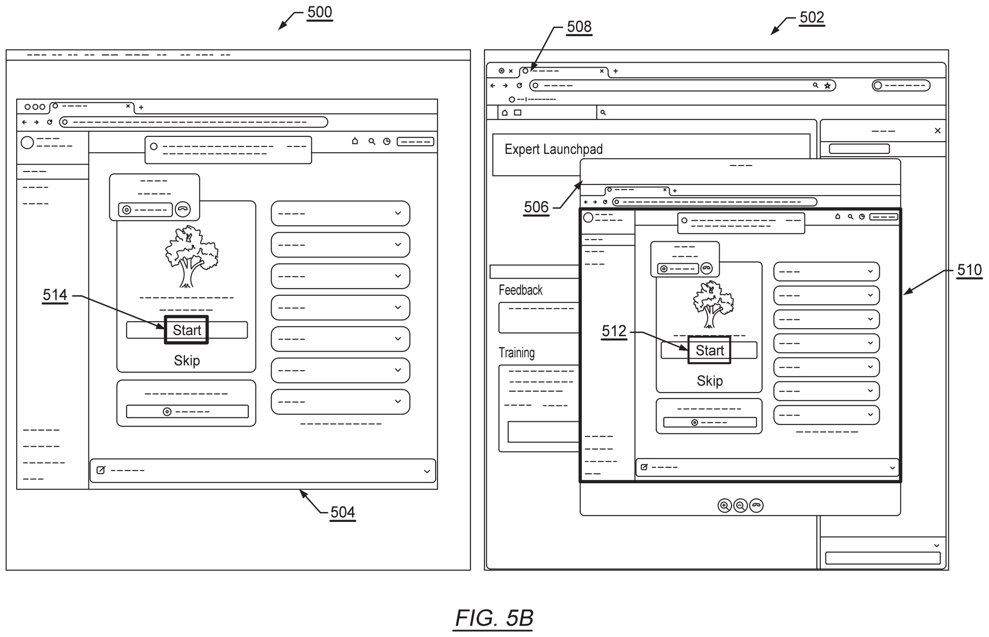

FIG. 5A and FIG. 5B, and FIG. 6 show examples in accordance with one or more embodiments. The following examples are for explanatory purposes only and not intended to limit the scope of one or more embodiments.

FIG. 5A and FIG. 5B show an example of the source screen (500) and the target screen (502). As shown in FIG. 5A, in the example, the source screen (500) shows the shared source browser. In the example, the shared screen is not the full screen, but only the source browser window (504). The target screen (500) shows the target browser (502). The target browser (508) shows the web application arranged for an expert user. The expert user may have a different web application interface that is displayed in the target browser (508). The target browser (508) also shows the web application portion of the source browser (506) (*i.e.,* the target portion). The target portion is demarcated (510) to show the boundaries of the target portion. As shown in FIG. 5B, when the target user makes an annotation (512), the annotation is transmitted to the source browser (504) and displayed (514).

One or more embodiments may be implemented on a computing system specifically designed to achieve an improved technological result. When implemented in a computing system, the features and elements of the disclosure provide a significant technological advancement over computing systems that do not implement the features and elements of the disclosure. Any combination of mobile, desktop, server, router, switch, embedded device, or other types of hardware may be improved by including the features and elements described in the disclosure.

FIG. 6 shows an example of multiple display device on the source user computing system in accordance with one or more embodiments. The source user computing system has primary screen (612), screen 1 (614), and screen 2 (616) with the arrangement shown in FIG. 6. In the example, the web application (604) is presented in the browser window (602) on screen 1 (614). To demarcate the web browser (604), the location (610) with respect to location (606) should be identified. However, because of the multiple display devices, the location (610) is with respect to location (608). To determine the location (610) with respect to location (606), the following operations may be performed.

In the example shown, browser API's window.screenX(), and window.screenY() are called in the instructions for the web application (604). The execution by the browser of the browser API's result in corresponding system calls to the operating system. The operating system returns with -720 for screen X and -1470 for screen Y. The negative numbers are because the location is to the left and above the origin. Calculating the actual positions (actualX, actualY) can be performed using the following equations: actualX = window.screenX - window.screen.availLeft; and actualY = window.screenY - window.screen.availTop. In the example, if screen is 1080x1920, then window.screen.availTop = -1080 and window.screen.availLeft = -1960 based on the negative numbers. Based on the position of the screen, the location of window is determined to be 1080-720 or 360 for the actualX location value and 1920-1470 or 450 for the actualY location value.

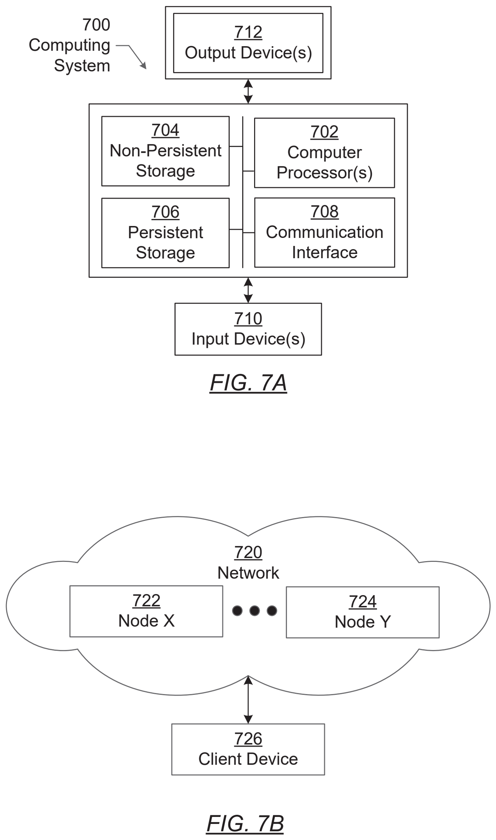

For example, as shown in FIG. 7A, the computing system (700) may include one or more computer processor(s) (702), non-persistent storage device(s) (704), persistent storage device(s) (706), a communication interface (708) (*e.g.,* Bluetooth interface, infrared interface, network interface, optical interface, *etc*.), and numerous other elements and functionalities that implement the features and elements of the disclosure. The computer processor(s) (702) may be an integrated circuit for processing instructions. The computer processor(s) (702) may be one or more cores, or micro-cores, of a processor. The computer processor(s) (702) includes one or more processors. The computer processor(s) (702) may include a central processing unit (CPU), a graphics processing unit (GPU), a tensor processing unit (TPU), combinations thereof, *etc.*

The input device(s) (710) may include a touchscreen, keyboard, mouse, microphone, touchpad, electronic pen, or any other type of input device. The input device(s) (710) may receive inputs from a user that are responsive to data and messages presented by the output device(s) (712). The inputs may include text input, audio input, video input, *etc.,* which may be processed and transmitted by the computing system (700) in accordance with one or more embodiments. The communication interface (708) may include an integrated circuit for connecting the computing system (700) to a network (not shown) (*e.g*., a local area network (LAN), a wide area network (WAN) such as the Internet, mobile network, or any other type of network) or to another device, such as another computing device, and combinations thereof.

Further, the output device(s) (712) may include a display device, a printer, external storage, or any other output device. One or more of the output device(s) (712) may be the same or different from the input device(s) (710). The input device(s) (710) and output device(s) (712) may be locally or remotely connected to the computer processor(s) (702). Many different types of computing systems exist, and the aforementioned input device(s) (710) and output device(s) (712) may take other forms. The output device(s) (712) may display data and messages that are transmitted and received by the computing system (700). The data and messages may include text, audio, video, *etc.,* and include the data and messages described above in the other figures of the disclosure.

Software instructions in the form of computer readable program code to perform embodiments may be encoded, in whole or in part, temporarily or permanently, to a computer readable medium. A computer readable medium may be provided as a computer-readable storage medium such as a solid state drive (SSD), compact disk (CD), digital video disk (DVD), storage device, a diskette, a tape, flash memory, physical memory, or any other computer readable storage medium. A computer readable storage medium may be referred to as a non-transitory computer readable medium. A computer-readable medium may also or alternatively be provided as a transmission medium by which instructions may be conveyed. A computer-readable transmission medium may include carrier waves, transmission signals or the like. A computer-readable transmission medium may convey instructions between components of a single computer system and/or between plural separate computer systems. Specifically, the software instructions may correspond to computer readable program code that, when executed by the computer processor(s) (702), is configured to perform one or more embodiments, which may include transmitting, receiving, presenting, and displaying data and messages described in the other figures of the disclosure.

The computing system (700) in FIG. 7A may be connected to, or be a part of, a network. For example, as shown in FIG. 7B, the network (720) may include multiple nodes (*e.g.,* node X (722) and node Y (724), as well as extant intervening nodes between node X (722) and node Y (724)). Each node may correspond to a computing system, such as the computing system shown in FIG. 7A, or a group of nodes combined may correspond to the computing system shown in FIG. 7A. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (700) may be located at a remote location and connected to the other elements over a network.

The nodes (*e.g.,* node X (722) and node Y (724)) in the network (720) may be configured to provide services for a client device (726). The services may include receiving requests and transmitting responses to the client device (726). For example, the nodes may be part of a cloud computing system. The client device (726) may be a computing system, such as the computing system shown in FIG. 7A. Further, the client device (726) may include or perform all or a portion of one or more embodiments.

The computing system of FIG. 7A may include functionality to present data (including raw data, processed data, and combinations thereof) such as results of comparisons and other processing. For example, presenting data may be accomplished through various presenting methods. Specifically, data may be presented by being displayed in a user interface, transmitted to a different computing system, and stored. The user interface may include a graphical user interface (GUI) that displays information on a display device. The GUI may include various GUI widgets that organize what data is shown, as well as how data is presented to a user. Furthermore, the GUI may present data directly to the user, *e.g.,* data presented as actual data values through text, or rendered by the computing device into a visual representation of the data, such as through visualizing a data model.

Therefore, from one perspective, there have been described techniques for performing web application based screen share annotations that include obtaining, from a source browser executing a web application performing a screen sharing, a location point of the source browser with respect to a shared source screen being shared. Performing web application based screen share annotations further includes calculating, from the location point, a source portion of the shared source screen that shows the web application, translating the source portion to a target portion within a target web browser executing on a target device. Performing web application based screen share annotations further includes demarcating, on the target display, the target portion within the target browser.

Further examples of feature combinations taught by the present disclosure are set out in the following numbered clauses.

Clause 1. A method comprising: obtaining, from a source browser executing a web application performing a screen sharing, a first location point of the source browser with respect to a shared source screen being shared; calculating, from the location point, a source portion of the shared source screen that shows the web application; translating the source portion to a target portion within a target web browser executing on a target device; and demarcating, on the target display, the target portion within the target browser.

Clause 2. The method of clause 1, further comprising: obtaining, by a target browser executing the web application, an annotation within the target portion; transmitting the annotation to the source browser; and displaying the annotation within the source browser.

Clause 3. The method of clause 1 or 2, further comprising: obtaining an inner height value and an outer height value of the source browser within the full source screen; and calculating a difference between the inner height value and the outer height value to exclude a browser tool portion of the browser and calculated the source portion.

Clause 4. The method of clause 3, further comprising: obtaining a first ratio of an inner width value and an outer width value of the source browser; setting a zoom level based on the first ratio; and scaling the inner height value based on the zoom level to obtain a scaled inner height value, wherein calculating the difference uses the scaled inner height value for the inner height value.

Clause 5. The method of any preceding clause, further comprising: obtaining a second location point of the source browser with respect to an origin point on a multiple screen display; identifying a position of the shared source screen with respect to the multiple screen display; and translating the second location point to identify the first location point that is with respect to the shared source screen.

Clause 6. The method of any preceding clause, further comprising: periodically polling, by the source browser, an operating system to identify an updated location point of the source browser with respect to the shared source screen; and updating the demarcation on the target display based on the updated location point.

Clause 7. The method of any preceding clause, further comprising: receiving, from an event listener, a browser resizing event; and updating the demarcation on the target display based on the browser resizing event.

Clause 8. The method of any preceding clause, wherein translating the source portion comprises: obtaining a first pixel resolution of the shared source screen; obtaining a second pixel resolution of a target screen being displayed in on the target display; determining a percentage change between the first pixel resolution and the second pixel resolution; and scaling the source portion using the percentage change to identify the target portion.

Clause 9. A system comprising: a source instance of a web application executing in a source browser configured to perform first operations comprising: executing a screen sharing of a shared source screen, and obtaining a first location point of the source browser with respect to the shared source screen being shared, wherein, from the location point, a source portion of the shared source screen that shows the web application is calculated; and a target instance of the web application executing in a target browser configured to perform second operations comprising: translating the source portion to a target portion within a target web browser executing on a target device, and demarcating, on the target display, the target portion within the target browser.

Clause 10. The system of clause 9, wherein the second operations further comprise: obtaining, by a target browser executing the web application, an annotation within the target portion, and transmitting the annotation to the source browser, wherein the first instance displays the annotation within the source browser.

Clause 11. The system of clause 9 or 10, wherein the first operations further comprise: obtaining an inner height value and an outer height value of the source browser within the full source screen; and calculating a difference between the inner height value and the outer height value to exclude a browser tool portion of the browser and calculated the source portion.

Clause 12. The system of clause 11, wherein the first operations further comprise: obtaining a first ratio of an inner width value and an outer width value of the source browser; setting a zoom level based on the first ratio; and scaling the inner height value based on the zoom level to obtain a scaled inner height value, wherein calculating the difference uses the scaled inner height value for the inner height value.

Clause 13. The system of any of clauses 9 to 12, wherein the first operations further comprise: obtaining a second location point of the source browser with respect to an origin point on a multiple screen display; identifying a position of the shared source screen with respect to the multiple screen display; and translating the second location point to identify the first location point that is with respect to the shared source screen.

Clause 14. The system of any of clauses 9 to 13, wherein the first operations further comprise: periodically polling, by the source browser, an operating system to identify an updated location point of the source browser with respect to the shared source screen, wherein the demarcation on the target display is updated based on the updated location point.

Clause 15. The system of any of clauses 9 to 14, wherein the first operations further comprise: receiving, from an event listener, a browser resizing event; and wherein the demarcation on the target display is updated based on the browser resizing event.

Clause 16. The system of any of clauses 9 to 15, wherein translating the source portion comprises: obtaining a first pixel resolution of the shared source screen; obtaining a second pixel resolution of a target screen being displayed in on the target display; determining a percentage change between the first pixel resolution and the second pixel resolution; and scaling the source portion using the percentage change to identify the target portion.

Clause 17. A computer readable medium comprising computer readable program code for causing one or more computing systems to perform operations comprising: obtaining, from a source browser executing a web application performing a screen sharing, a first location point of the source browser with respect to a shared source screen being shared; calculating, from the location point, a source portion of the shared source screen that shows the web application; translating the source portion to a target portion within a target web browser executing on a target device; and demarcating, on the target display, the target portion within the target browser.

Clause 18. The computer readable medium of clause 17, wherein the operations further comprise: obtaining, by a target browser executing the web application, an annotation within the target portion; transmitting the annotation to the source browser; and displaying the annotation within the source browser.

Clause 19. The computer readable medium of clause 17 or 18, wherein the operations further comprise: obtaining an inner height value and an outer height value of the source browser within the full source screen; and calculating a difference between the inner height value and the outer height value to exclude a browser tool portion of the browser and calculated the source portion.

Clause 20. The computer readable medium of any of clauses 17 to 19, wherein translating the source portion comprises: obtaining a first pixel resolution of the shared source screen; obtaining a second pixel resolution of a target screen being displayed in on the target display; determining a percentage change between the first pixel resolution and the second pixel resolution; and scaling the source portion using the percentage change to identify the target portion.

As used herein, the term "connected to" contemplates multiple meanings. A connection may be direct or indirect (*e.g*., through another component or network). A connection may be wired or wireless. A connection may be a temporary, permanent, or a semi-permanent communication channel between two entities.

The various descriptions of the figures may be combined and may include, or be included within, the features described in the other figures of the application. The various elements, systems, components, and steps shown in the figures may be omitted, repeated, combined, or altered as shown in the figures. Accordingly, the scope of the present disclosure should not be considered limited to the specific arrangements shown in the figures.

In the application, ordinal numbers (*e.g.,* first, second, third, *etc*.) may be used as an adjective for an element (*i.e.,* any noun in the application). The use of ordinal numbers is not to imply or create any particular ordering of the elements, nor to limit any element to being only a single element unless expressly disclosed, such as by the use of the terms "before," "after," "single," and other such terminology. Rather, ordinal numbers distinguish between the elements. By way of an example, a first element is distinct from a second element, and the first element may encompass more than one element and succeed (or precede) the second element in an ordering of elements.

Further, unless expressly stated otherwise, the conjunction "or" is an inclusive "or" and, as such, automatically includes the conjunction "and," unless expressly stated otherwise. Further, items joined by the conjunction "or" may include any combination of the items with any number of each item, unless expressly stated otherwise.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above can be devised which do not depart from the scope of the claims as disclosed herein. Accordingly, the scope should be limited only by the attached claims.

## Claims

1. A method comprising:
obtaining, from a source browser executing a web application performing a screen sharing, a first location point of the source browser with respect to a shared source screen being shared;
calculating, from the location point, a source portion of the shared source screen that shows the web application;
translating the source portion to a target portion within a target web browser executing on a target device; and
demarcating, on the target display, the target portion within the target browser.

2. The method of claim 1, further comprising:
obtaining, by a target browser executing the web application, an annotation within the target portion;
transmitting the annotation to the source browser; and
displaying the annotation within the source browser.

3. The method of claim 1 or 2, further comprising:
obtaining an inner height value and an outer height value of the source browser within the full source screen; and
calculating a difference between the inner height value and the outer height value to exclude a browser tool portion of the browser and calculated the source portion;
and, for example, further comprising: obtaining a first ratio of an inner width value and an outer width value of the source browser; setting a zoom level based on the first ratio; and scaling the inner height value based on the zoom level to obtain a scaled inner height value, wherein calculating the difference uses the scaled inner height value for the inner height value.

4. The method of any preceding claim, further comprising:
obtaining a second location point of the source browser with respect to an origin point on a multiple screen display;
identifying a position of the shared source screen with respect to the multiple screen display; and
translating the second location point to identify the first location point that is with respect to the shared source screen.

5. The method of any preceding claim, further comprising:
periodically polling, by the source browser, an operating system to identify an updated location point of the source browser with respect to the shared source screen; and
updating the demarcation on the target display based on the updated location point.

6. The method of any preceding claim, further comprising:
receiving, from an event listener, a browser resizing event; and
updating the demarcation on the target display based on the browser resizing event.

7. The method of any preceding claim, wherein translating the source portion comprises:
obtaining a first pixel resolution of the shared source screen;
obtaining a second pixel resolution of a target screen being displayed in on the target display;
determining a percentage change between the first pixel resolution and the second pixel resolution; and
scaling the source portion using the percentage change to identify the target portion.

8. A system comprising:
a source instance of a web application executing in a source browser configured to perform first operations comprising:
executing a screen sharing of a shared source screen, and
obtaining a first location point of the source browser with respect to the shared source screen being shared,
wherein, from the location point, a source portion of the shared source screen that shows the web application is calculated; and
a target instance of the web application executing in a target browser configured to perform second operations comprising:
translating the source portion to a target portion within a target web browser executing on a target device, and
demarcating, on the target display, the target portion within the target browser.

9. The system of claim 8, wherein the second operations further comprise:
obtaining, by a target browser executing the web application, an annotation within the target portion, and
transmitting the annotation to the source browser,
wherein the first instance displays the annotation within the source browser.

10. The system of claim 8 or 9, wherein the first operations further comprise:
obtaining an inner height value and an outer height value of the source browser within the full source screen; and
calculating a difference between the inner height value and the outer height value to exclude a browser tool portion of the browser and calculated the source portion;
wherein, for example, the first operations further comprise: obtaining a first ratio of an inner width value and an outer width value of the source browser; setting a zoom level based on the first ratio; and scaling the inner height value based on the zoom level to obtain a scaled inner height value, wherein calculating the difference uses the scaled inner height value for the inner height value.

11. The system of any of claims 8 to 10, wherein the first operations further comprise:
obtaining a second location point of the source browser with respect to an origin point on a multiple screen display;
identifying a position of the shared source screen with respect to the multiple screen display; and
translating the second location point to identify the first location point that is with respect to the shared source screen.

12. The system of any of claims 8 to 11, wherein the first operations further comprise:
periodically polling, by the source browser, an operating system to identify an updated location point of the source browser with respect to the shared source screen,
wherein the demarcation on the target display is updated based on the updated location point.

13. The system of any of claims 8 to 12, wherein the first operations further comprise:
receiving, from an event listener, a browser resizing event; and
wherein the demarcation on the target display is updated based on the browser resizing event.

14. The system of any of claims 8 to 13, wherein translating the source portion comprises:
obtaining a first pixel resolution of the shared source screen;
obtaining a second pixel resolution of a target screen being displayed in on the target display;
determining a percentage change between the first pixel resolution and the second pixel resolution; and
scaling the source portion using the percentage change to identify the target portion.

15. A computer readable medium comprising computer readable program code for causing one or more computing systems to perform the method of any of claims 1 to 7.
